# EUROPÄISCHE PATENTSCHRIFT

(11) **EP 1 820 621 B1**
(45) Veröffentlichungstag und Bekanntmachung des Hinweises auf die Patenterteilung: **06.10.2010**
(21) Anmeldenummer: 07002561.4
(22) Anmeldetag: 06.02.2007
(51) Int. Cl.: B29C 47/06, B29C 47/24, B29C 47/86

(54) **Vorrichtung zur Herstellung einer mit Substanzen beschickbaren rohrförmigen Umhüllung**
Device for manufacturing a tubular jacket chargeable with substances
Dispositif destiné à la fabrication d'une enveloppe tubulaire pouvant être chargée de substances

(30) Priorität: 17.02.2006 DE 102006007482
(43) Veröffentlichungstag der Anmeldung: 22.08.2007
(73) Patentinhaber: LeadX Aktiengesellschaft, 9491 Ruggell (LI)
(72) Erfinder: Skufca, Peter Maks, Dipl.-Ing., 1230 Domzale (SI)
(74) Vertreter: Winter, Brandl, Fürniss, Hübner, Röss, Kaiser, Polte - Partnerschaft

(56) Entgegenhaltungen:
- EP-A- 0 071 349
- EP-A- 0 457 926
- WO-A-00/71326
- WO-A-93/23649
- DE-A1- 10 249 141
- DE-A1- 19 546 823
- NL-A- 6 708 009
- US-A- 2 641 022
- US-A- 3 750 948
- US-A1- 2004 212 113

## Beschreibung

Die Erfindung betrifft eine Vorrichtung nach dem Oberbegriff des Anspruchs 1 zur Herstellung einer mit vorzugsweise empfindlichen Substanzen beschickbaren rohrförmigen Umhüllung, z.B. eines in der Pharmaindustrie verwendeten Primärpackmittels oder eines in der pyrotechnischen Industrie verwendeten Zündschlauchs.

Zum Abfüllen pulverartiger oder flüssiger Wirkstoffformulierungen werden in der Pharmaindustrie so genannte Primärpackmittel aus Polymermaterial in Form von Tabletten, Kapseln, Infusionsbeuteln, Flaschen für Blutkonserven, etc. verwendet. Dem Polymermaterial werden üblicherweise mehrere Zusatzstoffe zugemischt, die dem Primärpackmittel die jeweils gewünschten Eigenschaften, wie Ziehfähigkeit, Stabilität, UV-Beständigkeit, Oxidationsunempfindlichkeit, etc. geben sollen. Die Zusatzstoffe kommen aus den Gruppen der so genannten Weichmacher, die zur Elastizität der Polymere beitragen, Antioxidantien, die die Oxidation des Polymers verhindern, UV-Stabilisatoren, die das Polymer gegen UV-Licht beständig machen, und Polymerisationskatalysatoren, die die Polymerisation beschleunigen. Gerade bei der Herstellung von Primärpackmitteln für die Pharmaindustrie gilt es, darauf zu achten, dass eine Freisetzung von Zusatzstoffen aus dem Polymermaterial möglichst unterbleibt, um eine Interaktion mit dem im Primärpackmittel transportierten Wirkstoff zu verhindern. Da die verschiedenen Polymermaterialien als solche oftmals nicht in der Lage sind, die dem jeweiligen Primärpackmittel abverlangten Eigenschaften, wie z.B. Zugfestigkeit, UV-Beständigkeit, etc., zu gewährleisten, werden Primärpackmittel mit einer mehrschichtig aufgebauten Wand verwendet. In diesem Mehrschichtaufbau sorgt eine Polymerschicht beispielsweise für die Elastizität und eine andere Polymerschicht für die Stabilität und Integrität des Polymermaterials. Beispiele für die Herstellung derartiger mehrschichtig aufgebauter Primärpackmittel aus Polymermaterial sind aus der US 6,702,978 B1 oder der EP 0 374 247 A1 bekannt.

Rohrförmige Umhüllungen aus Polymermaterial werden des Weiteren beispielsweise in der pyrotechnischen Industrie zur Herstellung von Zündschläuchen verwendet, wie sie beispielsweise in der AT 207 302 B beschrieben werden. Die AT 207 302 B zeigt und beschreibt des Weiteren eine Vorrichtung zur Herstellung eines schnurförmigen Erzeugnisses, insbesondere einer Zündschnur, mit einem Kern aus festem Material in Form abgesonderter Teilchen, die in einer biegsamen Umhüllung eingeschlossen sind. Hierzu wird im Besonderen vorgeschlagen, ein thermoplastisches Kunststoffmaterial aus einer Pressdüse einer Strangpressvorrichtung in Rohrform auszupressen und das den Kern bildende Material über ein koaxial durch die Pressdüse hindurch bis kurz vor deren Mündung geführtes Zuführungsrohr einzuführen.

Eine Vorrichtung und ein Verfahren zur Herstellung eines an der Innenoberfläche mit einem Sprengstoffpulver beschichteten Schlauchs aus Kunststoff sind darüber hinaus aus der DE 195 46 823 C2 bekannt, die als nächstkommender Stand der Technik betrachtet wird und eine Vorrichtung gemäß dem Oberbegriff des Anspruchs 1 offenbart. Das Sprengstoffpulver wird aus einem Vorratsbehälter über eine durch ein Extrusionswerkzeug hindurch geführte Dosiervorrichtung in einen an der Mündung des Extrusionswerkzeugs austretenden Schlauch eingeführt. Die Dosiervorrichtung besteht im Besonderen aus einem koaxial im Extrusionswerkzeug angeordneten Dosierrohr mit einer im Inneren angeordneten Schnecke, an deren unterem Ende dicht hinter der Mündung des Extrusionswerkzeugs eine Verteilerscheibe angeordnet ist, die das durch das Dosierrohr hindurch geförderte Sprengstoffpulver gleichmäßig auf die Innenoberfläche des aus der Mündung des Extrusionswerkzeug austretenden Schlauchs kontinuierlich aufbringt.

Aus der EP 0457926 A1 ist eine Vorrichtung zum Herstellen von Schläuchen oder Rohren aus Kunststoff, insbesondere Polymeren, bekannt. Die Vorrichtung hat einen Blaskopf zum Extrudieren des zu verformenden Materials durch eine Ringdüse hindurch, um die herum ein Kühlring angeordnet ist. Zentrisch durch den Blaskopf hindurch ist ein Stützluft-Rohrstutzen geführt, über den in den extrudierten Blasschlauch Stützluft zugeführt wird, die den Blasschlauch kühlt. Im Inneren des Stützluft-Rohrstutzens ist ein Tragrohr angeordnet, das in einem Abstand oberhalb der Ringdüse des Blaskopfs in einem Sprühkopf endet. Aus dem Sprühkopf wird eine Flüssigkeit zerstäubt, die sich im Oberteil des Blasschlauch-Inneren niederschlägt und ebenso rasch wie dauerhaft eine antistatische Ausrüstung des durch die Stützluft bereits verfestigten Blasschlauchmaterials bewirkt.

Die DE 10249141 A1 offenbart einen Extrusionskopf zur Herstellung von hohlen, innenbeschichteten strangförmigen Produkten, mit einem Extrusionskopfgehäuse, mit einem daran ausgebildeten Ausschlussflansch zum Verbinden des Extrusionskopfes mit einem Extruder, mit einem Zuführkanal für das im Extruder plastifizierte Material, mit einer Extrusionsdüse, sowie mit einer Vorrichtung zum Zuführen von Stützluft und von Gleitmittel zum Beschichten des die Extrusionsdüse verlassenden Produkts. Zur Zuführung des Gleitmittels und der Stützluft sind im Extrusionskopf getrennte Zuführkanäle mit individuellen Austrittsöffnungen ausgebildet sind, die radial innerhalb des Bereiches der Austrittsöffnung eines Düsenmundstücks der Extrusionsdüse angeordnet sind. Der Gleitmittelzufuhrkanal endet an einem stromabwärtigen Ende eines Düsenmundstücks des Extrusionskopfs, während der Stützluft-Zuführkanal in einem Abstand stromab des Düsenmundstücks des Extrusionskopfs endet.

Des Weiteren ist aus der DE 37 14 161 A1 eine Zündschnur bekannt, in deren Wandung ein oder mehrere parallel zur Längsachse der Zündschnur verlaufende Verstärkungsfäden angeordnet sind, die aus reißfestem und dehnungsarmem Material bestehen. Die Verstärkungsfäden werden über entsprechende Durchführkanäle in die Wandung eines aus einem Extrusionswerkzeug austretenden Zündschnurschlauchs eingebettet. Gleichzeitig wird in das Innere der Zündschnur ein reaktives Material lose eingebracht. Die Wandung soll aus einem relativ flexiblen polymeren Material bestehen.

Allgemein ist es im Stand der Technik, beispielsweise im "Kunststoff-Taschenbuch", 29. Auflage 2004, erschienen im Carl Hanser Verlag, ISBN 3-446-22670-2, Kapitel 4.2.5, ferner bekannt, im sogenannten Koextrusionsverfahren mehrere Schichten gleichzeitig zu extrudieren, um gewünschte Eigenschaften durch Gas- oder Wasserdampfsperrschichten, UV-absorberhaltige Schichten oder Haftvermittlerschichten zu erreichen. Dabei können nach derzeitigem Stand bis zu sieben Schichten gleichzeitig wirtschaftlich extrudiert werden. Die Schmelzeströme werden dabei in oder kurz nach dem Werkzeug zusammengeführt. Dabei müssen jedoch Verarbeitungstemperaturen und Viskositäten der Schmelzen ungefähr gleich sein, um eine Verarbeitung zu ermöglichen, weil die Schichten am Austritt aus dem Werkzeug mit vergleichbaren Temperaturen aufeinandertreffen.

In den vorstehend dargestellten Anwendungsgebieten geht es um die Herstellung einer rohrförmigen Umhüllung mit einem mehrschichtig aufgebauten, d.h. aus mehreren Polymerschichten oder aus einer Polymerschicht plus einer oder mehrerer Beschichtungslagen gebildeten, Wand.

Ausgehend von der DE 195 46 823 A1 liegt der Erfindung die Aufgabe zugrunde, eine Vorrichtung zur Herstellung einer mit mehreren Substanzen beschickbaren rohrförmigen Umhüllung aus Polymermaterial wie z.B. eines in der Pharmaindustrie verwendeten Primärpackmittels oder eines in der pyrotechnischen Industrie verwendeten Zündschlauchs bereitzustellen.

Gelöst wird diese Aufgabe durch eine Vorrichtung mit den Merkmalen des Anspruchs 1. Vorteilhafte Weiterentwicklungen der erfindungsgemäßen Vorrichtung sind Gegenstand abhängiger Ansprüche.

Durch die erfindungsgemäße Vorrichtung wird eine gleichmäßige Beschickung der aus dem Extrusionswerkzeug austretenden rohrförmigen Umhüllung aus Polymermaterial mit beliebigen pulvrigen und/ oder flüssigen Substanzen, d.h. Beschichtungs- oder Füllstoffen, z.B. pharmazeutischen Wirk- oder Hilfsstoffen, reaktionsinerten Stoffen oder hochreaktiven Stoffen, in einem staubfreien, kontinuierlichen Prozess gewährleistet, auch wenn diese Stoffe nicht direkt hinter der Extrusionsdüse auftragbar sind. Zu den Ursachen dafür, dass die Stoffe nicht direkt hinter der Düse auftragbar sind, kann gehören, dass die Stoffe, wie Explosivstoffe oder empfindliche biologisch aktive Substanzen, durch die an dieser Stelle große Wärme der Umhüllung beeinflusst werden können. Je nachdem wie die Substanzen in die rohrförmige Umhüllung eingebracht werden, lässt sich eine Beschichtung der Innenoberfläche und/oder eine Befüllung der rohrförmigen Umhüllung erreichen.

Beispielsweise kann über die zweite Dosiereinrichtung zunächst die Innenoberfläche der aus dem Extrusionswerkzeug austretenden rohrförmigen Umhüllung mit einer zweiten Substanz in der Weise beschichtet werden, dass eine dünne, gleichmäßige dicke Schicht erhalten wird, die beispielsweise die Aufgabe hat, eine Freisetzung von im Polymermaterial der aus dem Extrusionswerkzeug austretenden rohrförmigen Umhüllung enthaltenen Zusatzstoffen zu verhindern. Auf diese Weise lässt sich die Innenoberfläche der aus dem Extrusionswerkzeug austretenden rohrförmigen Umhüllung mit der ersten Substanz quasi versiegeln. Anschließend kann dann die mit der Beschichtung an der Innenoberfläche versehene rohrförmige Umhüllung über die erste Dosiereinrichtung mit einer ersten Substanz erneut beschichtet oder aber auch befüllt werden.

Alternativ dazu kann die rohrförmige Umhüllung auch mit den beiden Substanzen zeitlich versetzt befüllt werden.

Durch die räumliche Trennung der Einbringung der ersten und zweiten Substanz über die erste bzw. zweite Dosiereinrichtung wird so in einem kontinuierlichen Prozess eine Beschichtung und/oder Befüllung der aus dem Extrusionswerkzeug austretenden rohrförmigen Umhüllung erreicht.

Die erste und zweite Dosiereinrichtung weisen vorzugsweise jeweils eine in einem Rohr mit definierter Drehzahl angetriebene Förderschnecke mit einer in Förderrichtung dicht hinter der Austrittsöffnung des Zuführrohrs angeordneten Verteilerscheibe auf, wobei das Zuführrohrs der ersten Dosiereinrichtung durch die Förderschnecke der zweiten Dosiereinrichtung hindurch geführt ist.

Die zweite Dosiereinrichtung ist koaxial zum Extrusionswerkzeug angeordnet und die erste Dosiereinrichtung koaxial zur zweiten Dosiereinrichtung durch diese hindurch geführt.

Die Schneckengänge der Förderschnecken der ersten und zweiten Dosiereinrichtung können dieselbe oder verschiedene Steigungen aufweisen. Letztere Variante ermöglicht eine identische Dosierung der Fördermengen der ersten und zweiten Dosiereinrichtung der verschiedenen Schneckendurchmesser bei derselben Drehzahl.

Die Förderschnecken der ersten und zweiten Dosiereinrichtungen können einen gemeinsamen Drehantrieb oder jeweils einen eigenen Drehantrieb aufweisen.

Im letzteren Fall kann durch eine elektronische Steuereinheit zum Steuern/Regeln der Antriebs der ersten und zweiten Dosiereinrichtung die erste und zweite Dosiereinrichtung in Abhängigkeit von der jeweils gewünschten Fördermenge eingestellt werden.

Vorzugsweise sind diejenigen Komponenten der ersten und zweiten Dosiereinrichtung, deren Oberfläche mit dem jeweiligen Beschichtungs-/Füllmaterial in Berührung kommen, zumindest teilweise aus Beryllium-Bronze, Aluminium, Bronze, Polymer, Teflon, Keramik und/oder VA-Stahl hergestellt oder weisen eine Oberflächenbeschichtung aus einem dieser Materialien oder einem anderen pharmazeutisch annehmbaren Material auf.

Durch eine derartige Beschichtung oder Materialwahl abhängig von den zu verarbeitenden Materialien kann sichergestellt werden, dass das Füllmaterial nicht während der Zufuhr durch Abrieb verunreinigt wird. Zudem kann die Standzeit der Beschichtungseinrichtung optimiert werden.

In einer Weiterentwicklung sind die beiden Dosiereinrichtungen thermisch gegen den Extruder isoliert und ist eine Kühleinrichtung zur Kühlung der ersten und/oder zweiten Zuführeinrichtung vorgesehen.

Wie bereits beschrieben kann die Erfindung bevorzugt für temperaturempfindliche Beschichtungs- bzw. Füllstoffe eingesetzt werden. Werden diese Stoffe durch das Extrusionswerkzeug zugeführt, können sie sich aufheizen und dadurch chemisch verändern. Dies wird durch die Kühlung vermieden. Zudem können die gekühlt aufgebrachten Stoffe an der Stelle des Aufbringens bei Bedarf die Umhüllung von innen abkühlen. Herkömmlich wird die Abkühlung, sofern sie erforderlich ist, meist dadurch erreicht, dass die Umhüllung durch ein Wasser- oder Ölbad gezogen wird. Dies kann durch die erfindungsgemäße Kühlung von innen durch die gekühlte Beschichtung ergänzt und in manchen Fällen ersetzt werden.

Noch weiter bevorzugt weist die erfindungsgemäße Vorrichtung eine Einrichtung auf, um den aufgebrachten Substanzen Energie zuzuführen.

Es kann zweckmäßig sein, den aufgebrachten Substanzen Energie zuzuführen, um z.b. nach dem Aufbringen eine Reaktion zu verursachen. Beispielsweise kann je nach aufgebrachter Substanz durch die Reaktion die Adhäsion an der Umhüllung oder bei mehreren aufgebrachten Stoffen eine Reaktion zwischen den Stoffen, beispielsweise eine Polymerisation, erzeugt werden. Eine weitere Alternative kann das Auftragen eines Pulvers aus magnetischen Dipolen sein, die dann über ein Magnetfeld ausgerichtet werden, um dem Erzeugnis gewünschte magnetische Eigenschaften zu verleihen.

Die Energiezufuhr kann beispielsweise durch Strahlung (Infrarot- bzw. Wärme, Licht, Röntgenstrahlung etc.), elektromagnetisch, mechanisch (z.B. durch Druck oder Reibung) oder auf beliebige andere geeignete Weise erfolgen.

Selbstverständlich kann die erfindungsgemäße Vorrichtung auch in einem herkömmlichen Koextrusionswerkzeug verwendet werden, um in einer rohrförmigen Umhüllung mit mehrlagigem Aufbau die innerste Lage mit einem erfindungsgemäßen Werkzeug zu beschichten.

Die Erfindung wird nachstehend anhand von bevorzugten Ausführungsformen unter Bezugnahme auf die einzige Figur beschrieben, die schematisch eine erfindungsgemäße Vorrichtung zeigt.

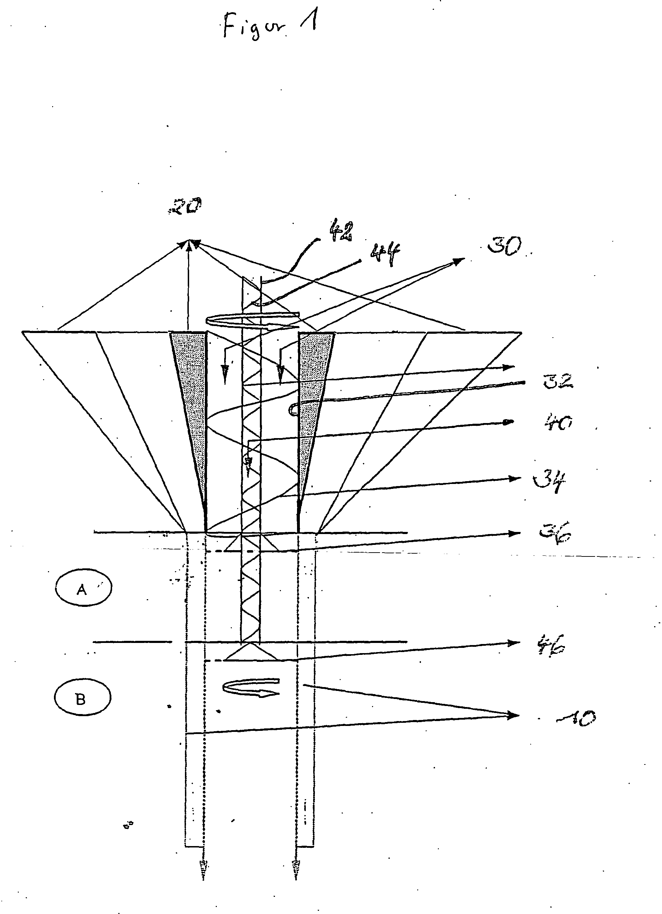

Fig. 1 zeigt schematisch eine erfindungsgemäße Vorrichtung, genauer eine Düse eines erfindungsgemäßen Extrudierwerkzeugs. Zur Vereinfachung der Erläuterung wird die Düse für nur einen extrudierten Strang gezeigt.

Die gezeigte Düse begrenzt mit den Wandungen 20 den Raum, durch den das Extrudat geführt wird, so dass das Extrudat als ein Schlauch 10 aus der Düse austritt. Als Extrudermaterial für den Schlauch 10 werden beispielsweise Granulate von PE, PP, PVC, EVA und Mischungen, gegebenenfalls auch andere für das Verfahren geeignete Stoffe verwendet. Dieser Schlauch 10 kann in weiteren Schritten wie in herkömmlichen Verfahren verarbeitet werden; beispielsweise kann der Schlauch abgezogen werden, um sich bis auf einen vorgegebenen Durchmesser D zu verjüngen, durch ein Wasserbad laufen, aufgewickelt oder abgelängt werden etc.

Durch eine zentrale Bohrung 30 des Werkzeugs führt ein Zuführrohr 42 einer ersten Dosiereinrichtung 40, mit einer darin angeordneten, in der Figur nur schematisch angedeuteten Förderschnecke 44, die mit Hilfe eines nicht dargestellten Motors angetrieben bzw. gesteuert oder geregelt wird und eine Substanz wie ein Pulver, eine Flüssigkeit, ein Pulvergemisch, eine Emulsion oder dergleichen aus einem nicht dargestellten Vorratsbehälter fördert, die auf die Innenseite des Schlauchs aufzutragen ist.

Direkt nach dem Austritt aus dem Extrusionswerkzeug ist der Schlauch noch sehr heiß. Empfindliche Chemikalien, wie bestimmte Medikamente oder Sprengstoffe können gegebenenfalls daher nicht an dieser Stelle zugeführt bzw. auf den Schlauch aufgetragen werden. Erfindungsgemäß ragt daher das Zuführrohr 42 ein Stück weiter in den Schlauch hinein und endet nicht wie im Stand der Technik vor oder unmittelbar nach dem Austritt aus der Düse, bevor es in einem Verteiler 46 mündet.

Der Verteiler 46 verteilt die Chemikalien gleichmäßig dosiert auf die abgekühlte Schlauchinnenwand. In einer einfachen, für Pulver geeigneten und in der Figur schematisch gezeigten Form besteht der verteiler 46 aus einer sich drehenden Prallplatte bzw. Verteilerplatte unterhalb des Zuführrohrs 42, die mit der Förderschnecke 44 gemeinsam oder davon getrennt rotiert und das Pulver durch Zentrifugalkraft gegen die Schlauchwand schleudert. Selbstverständlich sind auch andere Ausführungsformen möglich; Gase, Flüssigkeiten und Emulsionen können beispielsweise durch ein Rohr zugeführt und unter Druck aus Düsen auf die Schlauchwände gespritzt werden. Für das Rohr kann zwecks besserer Kühlung oder Zufuhr unterschiedlicher Substanzen eine doppel- oder mehrwandige Ausführung vorgesehen sein.

Durch den von der Mündung des Extrusionswerkzeugs beabstandeten Verteiler 46 kann die aufzutragende Substanz auf eine abgekühlte Schlauchinnenfläche treffen, so dass beispielsweise bei Sprengstoffen die Gefahr deutlich verringert ist, dass diese sich durch die Wärme des Schlauchs entzünden können. Auch andere reaktive Substanzen, beispielsweise biologisch wirksame Stoffe, die durch hohe Temperaturen zerstört werden, können erfindungsgemäß aufgebracht werden. Weiterhin ist es möglich, gefahrlos mit größeren Toleranzen der Temperatur der Schmelze zu arbeiten oder den Prozess mit geringerer Rücksichtnahme auf die Temperatur am Düsenaustritt zu optimieren, weil die Temperatur an der Stelle, an welcher die Substanz aufgebracht wird, von der Temperatur am Düsenaustritt unabhängig geregelt werden kann, beispielsweise durch eine Abkühlstrecke oder auch durch erneutes Aufheizen.

Im einfachsten Fall kann die Schmelze bis zur Beschichtung mit der aufzubringenden Substanz langsam abkühlen, ohne durch eine direkt nach dem Austritt aufgetragene Substanz abgeschreckt zu werden; dadurch können Fehler im extrudierten Schlauch verringert werden.

Um eine gute Haftung zu erzielen, kann eine (nicht gezeigte) zusätzliche Vorrichtung am Ausgang des Werkzeugs eingebaut werden, um die Innenwand des Schlauchs zu riffeln oder aufzurauhen. Dadurch erzielt man eine Oberflächenvergrößerung und eine weiter verbesserte Haftung und kann außerdem die Pulvermenge in einem weiteren Bereich steuern.

Wie in der Figur schematisch gezeigt ist die (innere) erste Dosiervorrichtung 42, 44, 46 durch eine (äußere) zweite Dosiervorrichtung mit einem Zuführrohr 32 und einer schematisch als Förderschnecke 34 gezeigten Zuführeinrichtung ergänzt, die über einen Verteiler 36 eine Substanz am Ausgang des Extrusionswerkzeugs auf die noch heiße Oberfläche aufträgt. Auf diese Art können zwei oder bei Fortführung desselben Prinzips auch mehrere Schichten nacheinander auf die Innenseite des Schlauchs aufgetragen werden. Beispielsweise kann eine zweite hitzeunempfindliche Schicht, die unmittelbar nach dem Schlauchaustritt auf die Umhüllung aufgetragen wird, die Haftfähigkeit der mit der erfindungsgemäßen Dosiereinrichtung aufgetragenen ersten Schicht verbessern. Außer der gezeigten koaxialen Anordnung der Dosiervorrichtungen ist natürlich auch eine Anordnung vorstellbar, bei der beispielsweise mehrere erste Dosiervorrichtungen nebeneinander durch die zweite Dosiervorrichtung geführt werden, die dann entweder auf gleicher Höhe oder in unterschiedlichen Abständen vom Ausgang der Extrusionsdüse eine oder mehrere unterschiedliche Substanzen auftragen oder in den Schlauch einfüllen. Auf diese Weise kann, wenn dies gewünscht wird, der Schlauch mit mehreren Komponenten gefüllt oder beschichtet werden, die nur in Grenzbereichen ineinanderlaufen. Beispielsweise ist es vorstellbar, auf diese Art einen mehrfarbigen Schlauch zu fertigen, um durch Innenbeleuchtung entsprechende Lichteffekte zu erzeugen.

Eine weitere Anwendungsmöglichkeit der bevorzugten Ausführungsform mit mehreren insbesondere koaxial ineinander geführten Dosiereinrichtungen ist es, inerte oder Sperrschichten aufzutragen, die verhindern, dass ein Füllstoff, mit dem der Schlauch befüllt werden soll, mit der Wand des Schlauchs oder einer vor der Sperrschicht aufgetragenen Innenschicht wechselwirkt. Als besonderer Vorteil gegenüber dem herkömmlichen Koextrusionsverfahren ist dabei zu erwähnen, dass durch das getrennte Aufbringen eine Beschichtung der Schlauchinnenfläche mit Stoffen möglich ist, die nicht durch herkömmliches Koextrudieren herstellbar sind, beispielsweise weil sie generell nicht für das Extrusionsverfahren geeignet sind oder von denen der äußeren Umhüllung zu stark abweichende Verarbeitungstemperaturen aufweisen.

Zudem kann, falls dies erforderlich ist, über Energiezufuhr und Energieabfuhr von außen (Kühlung) vor jeder der koaxialen Dosiereinrichtungen jeweils eine optimale Temperatur eingestellt werden. Beispielsweise wäre es möglich, zunächst eine Schicht auf den heißen Schlauch unmittelbar nach dem Verlassen der Düse aufzutragen, anschließend den Schlauch durch eine Kühlvorrichtung zu führen, dann eine Beschichtung über eine erste erfindungsgemäße Vorrichtung auf den "kalten" Schlauch aufzutragen, danach den Schlauch wieder zu erwärmen und eine weitere Schicht oder Füllung aufzutragen.

Mit dem erfindungsgemäßen Verfahren können die Innenseiten von Schläuchen beschichtet werden; alternativ können die Schläuche auch bei der Fertigung befüllt werden.

Gewerbliche Anwendungsbeispiele finden sich beispielsweise bei der Herstellung von Zündschläuchen, die mit einer Verstärkungsschicht versehen und danach mit Zündpulver befüllt werden, beispielsweise Schläuchen aus dem Material "Surlyn" der Firma DuPont.

Eine andere Anwendung ist die Herstellung von analytischen Trennsäulen, deren Wände mit inertem und thermisch beständigem PTFE (Teflon) oder FEP beschichtet und mit Kieselgel befüllt und in der chemischen Industrie zur Stoffanalyse verwendet werden. Beispielsweise können zum Nachweis bestimmter Stoffe Antikörper auf die Wand aufgebracht und mit einer weiteren Schicht teilweise abgedeckt bzw. stabilisiert werden, um ein Auswaschen durch die im Betrieb der Säule durchgeleitete Flüssigkeit zu verhindern.

Mit dem erfindungsgemäßen Verfahren lassen sich kostengünstig sogenannte Analytik-Kits wie RIAs (Radio Immuno Assays) zur Hormonbestimmung herstellen. Durch die Fokussierung der innen aufgetragenen reaktiven Stoffe bzw. Reagenzien werden weitere analytische Bestimmungsmethoden möglich.

Auch in anderen Anwendungen der Medizintechnik kann es von Nutzen sein, biologisch aktive oder chemisch besonders inerte Substanzen auf die Schlauchinnenseiten aufzubringen, um verbesserte Dialyseeinrichtungen oder Infusionsbeutel zu schaffen. Insbesondere bei Infusionsbeuteln mit flüssigen Inhalten muss beispielsweise möglichst weitgehend verhindert werden, dass ein Teil der Flüssigkeit an der Wand haften bleibt. Noch wichtiger ist es, sicherzustellen, dass nicht ein Teil des Inhalts mit der Beutelwand reagiert und der Inhalt dadurch teilweise zerstört wird.

Die Weiterverarbeitung eines solchen Schlauchs kann wie im Stand der Technik üblich mittels eines Portionierers erfolgen, der nach der letzten Dosiervorrichtung angeordnet ist. Der Portionierer kann den vorzugsweise bereits über die erfindungsgemäßen Dosiereinrichtungen gefüllten Endlosschlauch in kleinere Einheiten wie Infusionsbeutel, analytische Säulen oder Arzneimittelpackungen trennen. Dies erfolgt wie im Stand der Technik bekannt beispielsweise durch Abschneiden, Abklemmen oder Abquetschen und anschließendes bzw. gleichzeitiges Verschwei-ßen, um den Inhalt sicher verpackt zu haben. Selbstverständlich kann auch wie im Stand der Technik bekannt ein Verschluß, gegebenenfalls eine Kanüle, an die einzelnen Einheiten angefügt werden.

## Patentansprüche

1. Vorrichtung zur Herstellung einer rohrförmigen Umhüllung (10), mit einer durch ein Extrusionswerkzeug (20) hindurch geführten ersten Dosiereinrichtung (40) zum dosierten Einbringen einer ersten Substanz in eine aus dem Extrusionswerkzeug (20) austretende rohrförmige Umhüllung (10) in einem vorab bestimmten Abstand stromabwärts der Mündung des Extrusionswerkzeugs, wobei die erste Dosiereinrichtung (40) eine in einem Zuführrohr (42) mit definierter Drehzahl antreibbare Förderschnecke (44) mit einem in Förderrichtung dicht hinter der Rohrmündung angeordneten Verteiler (46) aufweist, **gekennzeichnet durch**
eine zweite Dosiereinrichtung (30, 34, 36) zum dosierten Einbringen einer zweiten Substanz in die rohrförmige Umhüllung stromaufwärts des Verteilers (46) der ersten Dosiereinrichtung (40),
wobei die erste und zweite Dosiereinrichtung (30, 40) koaxial zum Extrusionswerkzeug (20) angeordnet sind und zum Fördern der ersten bzw. zweiten Substanz voneinander unabhängig antreibbare Fördervorrichtungen (34, 44) aufweisen.

2. Vorrichtung nach Anspruch **1**, **gekennzeichnet durch** eine elektronische Steuereinheit zum unabhängigen Steuern/Regeln des Drehantriebs der ersten und zweiten Dosiereinrichtung (30, 40) in Abhängigkeit von der jeweils gewünschten Fördermenge.

3. Vorrichtung nach Anspruch 1 oder 2**, dadurch gekennzeichnet, dass** diejenigen Komponenten der **ersten und zweiten** Dosiereinrichtung (30, 40), die im Betrieb mit der jeweils eingebrachten Substanz in Berührung kommen, zumindest teilweise aus Beryllium-Bronze, Aluminium, Bronze, Polymer, Teflon, Keramik und/oder VA-Stahl oder einem Material mit vergleichbaren pharmazeutischen Eigenschaften hergestellt sind oder eine Oberflächenbeschichtung (32) aus einem dieser Materialien aufweisen.

4. Vorrichtung nach einem der Ansprüche 1 bis 3, **dadurch gekennzeichnet, dass** die erste und zweite Dosiereinrichtung (30, 40) thermisch isoliert durch das Extrusionswerkzeug (20) hindurch geführt ist.

5. Vorrichtung nach Anspruch 4, **gekennzeichnet durch** eine Kühleinrichtung zum Kühlen der ersten und zweiten Dosiereinrichtung (30, 40).

6. Vorrichtung nach einem der Ansprüche 1 bis 5, **gekennzeichnet durch** eine dem Extrusionswerkzeug (20) nachgeschaltete Energiezufuhreinrichtung, um der über die erste Dosiereinrichtung (40) in die rohrförmige Umhüllung (10) eingebrachten Substanz Energie zuzuführen.

7. Vorrichtung nach einem der Ansprüche 1 bis 6, **gekennzeichnet durch** ein Koextrusionswerkzeug zum Herstellen einer rohrförmigen Umhüllung mit einem mehrlagigen Wandaufbau.

8. Vorrichtung zum Herstellen einer rohrförmigen Umhüllung nach einem der vorhergehenden Ansprüche, **dadurch gekennzeichnet, dass** die Vorrichtung weiterhin Folgendes aufweist:
einen Portionierer, der im Lauf der rohrförmigen Umhüllung hinter der letzten Dosiervorrichtung angeordnet ist, und der die rohrförmige Umhüllung durch Abklemmen, Abschneiden, oder einen ähnlichen Vorgang in Beutel unterteilt.

9. Vorrichtung zum Herstellen einer rohrförmigen Umhüllung nach Anspruch 8**, dadurch gekennzeichnet, dass** der Portionierer an jedem Beutel einen Wulst ausbildet, an dem der Beutel aufhängbar ist.

## Claims

1. Device for producing a tubular covering (10), having a first metering device (40) which is fitted through an extrusion tool (20) in order to introduce a first substance in a metered manner into a tubular covering (10) which extends out of the extrusion tool (20) with predetermined spacing downstream of the opening of the extrusion tool, the first metering device (40) having a screw conveyor (44) which can be driven at a defined speed in a supply tube (42) and which has a distributor (46) which is arranged in an adjacent manner downstream of the tube opening in a conveying direction,
**characterised by**
a second metering device (30, 34, 36) for metered introduction of a second substance into the tubular covering upstream of the distributor (46) of the first metering device (40),
the first and second metering device (30, 40) being arranged coaxially relative to the extrusion tool (20) and having conveying devices (34, 44) which can be driven in a mutually independent manner in order to convey the first and second substance, respectively.

2. Device according to claim 1, **characterised by** an electronic control unit for independently controlling/adjusting the rotary drive of the first and second metering device (30, 40) in accordance with the conveying quantity desired.

3. Device according to claim 1 or claim 2, **characterised in that** those components of the first and second metering device (30, 40) which move into contact with the introduced substance during operation are at least partially produced from beryllium bronze, aluminium, bronze, polymer, Teflon, ceramic material and/or high-grade steel or a material having comparable pharmaceutical properties, or have a surface coating (32) comprising one of those materials.

4. Device according to any one of claims 1 to 3, **characterised in that** the first and second metering device (30, 40) is fitted through the extrusion tool (20) in a thermally insulated manner.

5. Device according to claim 4, **characterised by** a cooling device for cooling the first and second metering device (30, 40).

6. Device according to any one of claims 1 to 5, **characterised by** an energy supply device which is connected downstream of the extrusion tool (20) in order to supply energy to the substance which is introduced into the tubular covering (10) via the first metering device (40).

7. Device according to any one of claims 1 to 6, **characterised by** a co-extrusion tool for producing a tubular covering having a multiple-layered wall construction.

8. Device for producing a tubular covering according to any one of the preceding claims, **characterised in that** the device further has the following:
a portioning device which is arranged downstream of the last metering device in the travel of the tubular covering and which subdivides the tubular covering into pockets by pinching-off, cutting or a similar operation.

9. Device for producing a tubular covering according to claim 8, **characterised in that** the portioning device forms, on each pocket, a bead on which the pocket can be suspended.

## Revendications

1. Dispositif destiné à la fabrication d'une enveloppe tubulaire (10) avec un premier dispositif de dosage (40) traversant un outil d'extrusion (20) pour l'introduction dosée d'une première substance dans une enveloppe tubulaire (10) sortant de l'outil d'extrusion (20) à une distance prédéterminée en aval de l'orifice de l'outil d'extrusion, le premier dispositif de dosage (40) présentant une vis sans fin (44) pouvant être entraînée dans un tube d'alimentation (42) à une vitesse de rotation définie avec un distributeur (46) disposé juste derrière l'orifice de tube dans le sens de transport,
**caractérisé par** un second dispositif de dosage (30, 34, 36) pour l'introduction dosée d'une seconde substance dans l'enveloppe tubulaire en amont du distributeur (46) du premier dispositif de dosage (40),
le premier et le second dispositif de dosage (30, 40) étant disposés coaxialement à l'outil d'extrusion (20) et présentant pour le transport de la première ou de la seconde substance des dispositifs de transport (34, 44) pouvant être entraînés indépendamment l'un de l'autre.

2. Dispositif selon la revendication 1, **caractérisé par** une unité de commande électronique pour la commande/régulation indépendante de l'entraînement rotatif du premier et second dispositif de dosage (30, 40) en fonction du volume de transport souhaité respectivement.

3. Dispositif selon la revendication 1 ou 2, **caractérisé en ce que** les composants du premier et second dispositif de dosage (30, 40) qui entrent en contact en fonctionnement avec la substance introduite respectivement, sont fabriqués au moins en partie en bronze au béryllium, en aluminium, en bronze, en polymère, en téflon, en céramique et/ou en acier VA ou en un matériau avec des propriétés pharmaceutiques comparables ou présentent un revêtement de surface (32) en l'un de ces matériaux.

4. Dispositif selon l'une quelconque des revendications 1 à 3, **caractérisé en ce que** le premier et second dispositif de dosage (30, 40) traversent en étant isolés thermiquement, l'outil d'extrusion (20).

5. Dispositif selon la revendication 4, **caractérisé par** un dispositif de refroidissement pour le refroidissement du premier et second dispositif de dosage (30, 40).

6. Dispositif selon l'une quelconque des revendications 1 à 5, **caractérisé par** un dispositif d'alimentation en énergie monté en aval de l'outil d'extrusion (20) afin d'amener de l'énergie à la substance introduite par le biais du premier dispositif de dosage (40) dans l'enveloppe tubulaire (10).

7. Dispositif selon l'une quelconque des revendications 1 à 6, **caractérisé par** un outil de coextrusion pour la fabrication d'une enveloppe tubulaire avec une structure de paroi multicouche.

8. Dispositif destiné à la fabrication d'une enveloppe tubulaire selon l'une quelconque des revendications précédentes, **caractérisé en ce que** le dispositif présente en outre ce qui suit :
un portionneur qui est disposé dans le passage de l'enveloppe tubulaire derrière le dernier dispositif de dosage et qui divise l'enveloppe tubulaire en sachet par pincement, découpage ou un processus semblable.

9. Dispositif destiné à la fabrication d'une enveloppe tubulaire selon la revendication 8, **caractérisé en ce que** le portionneur réalise, sur chaque sachet, un bourrelet, auquel peut être suspendu le sachet.
